# EUROPÄISCHE PATENTSCHRIFT

(11) **EP 2 331 373 B1**
(45) Veröffentlichungstag und Bekanntmachung des Hinweises auf die Patenterteilung: **27.03.2013**
(21) Anmeldenummer: 09781613.6
(22) Anmeldetag: 07.08.2009
(51) Int. Cl.: B60S 1/40, B60S 1/38

(54) **ANSCHLUSSVORRICHTUNG ZUM GELENKIGEN VERBINDEN EINES WISCHBLATTS**
CONNECTION DEVICE FOR THE ARTICULATED CONNECTION OF A WIPER BLADE
DISPOSITIF D'ASSEMBLAGE POUR LA LIAISON ARTICULÉE D'UN BALAI D'ESSUIE-GLACE

(30) Priorität: 19.09.2008 DE 102008042236
(43) Veröffentlichungstag der Anmeldung: 15.06.2011
(73) Patentinhaber: Robert Bosch GmbH, 70442 Stuttgart (DE)
(72) Erfinder: OP'T ROODT, Inigo, B-3500 Hasselt (BE)
(86) Internationale Anmeldenummer: PCT/EP2009/060276
(87) Internationale Veröffentlichungsnummer: WO 2010/031640

(56) Entgegenhaltungen:
- DE-A1- 10 259 477
- DE-A1- 10 340 139
- DE-A1-102007 024 557
- DE-U1-202005 021 307

## Beschreibung

### Stand der Technik

Die Erfindung geht von einer Anschlussvorrichtung nach dem Oberbegriff des Anspruchs 1 aus.

Aus der DE 20 2005 021 307 U1 ist eine Anschlussvorrichtung bekannt. Sie umfasst ein Anschlusselement, das mit dem Wischblatt fest verbunden ist, und einen Adapter, der an einem hakenförmigen Ende eines Wischarms in gewohnter Weise angebracht ist. Der Adapter ist mit dem Anschlusselement über Lagerelemente in Form von Lagerzapfen am Anschlusselement und offenen Naben am Adapter gelenkig miteinander verbunden. Das Anschlusselement selbst umfasst zwei Teile, und zwar einen so genannten Verbindungsträger, der mit dem Wischblatt verbunden ist, und an dem ein Verbinder befestigt ist, der die Lagerzapfen trägt.

Aus der DE 102 59 477 A1 ist eine gattungsgemäße Anschlussvorrichtung bekannt, bei der in einem mittleren Bereich eines Wischblatts an diesem ein Anschlusselement in Form einer Blechkralle befestigt ist. Diese besitzt zwei Seitenwände, die von der Wischleiste wegweisen und zwischen sich eine Nabe für einen mit dem Wischarm fest verbundenen Lagerpin tragen. Der Lagerpin und die Nabe bilden ein Gelenk mit einer quer zur Längsrichtung des Wischblatts verlaufenden Gelenkachse, durch die der Wischarm schwenkbar mit dem Wischblatt verbunden ist.

In der Betriebsstellung des Wischblatts ist der Lagerpin in der Nabe durch ein Fangelement gesichert und kann nicht aus der Nabe herausgezogen werden. In einer Ausgestaltung wird das Fangelement durch einen Fanghaken gebildet, der ein u-förmiges, hakenförmiges Ende des Wischarms bildet. In der Betriebsstellung umfasst das hakenförmige Ende eine Abdeckung des Anschlusselements mit geringem Spiel. Dabei ist das hakenförmige Ende nach außen so weit von dem Lagerpin entfernt, dass dieser in einer bestimmten Winkelstellung in die Nabe eingeschoben werden kann. Gleichzeitig bildet der Fanghaken einen Winkelanschlag für das Wischblatt nahe der Betriebsstellung.

### Offenbarung der Erfindung

Der Adapter besitzt eine erste Seitenwand und eine zweite Seitenwand, die über eine Stirnwand hufeisenförmig verbunden sind. Die Anlageflächen für das hakenförmige Ende sind an den Außenseiten der Seitenwände und der Stirnwand angeordnet und verlaufen etwa in Richtung einer Hochachse des Wischblatts. Dadurch ergibt sich bei geringem Bauaufwand eine flache Bauweise der Anschlussvorrichtung. Ferner ist sie bestens geeignet, Drehmomente um die Längsachse des Wischblatts aufzunehmen.

Nach der Erfindung besitzt der Adapter in den Außenseiten seiner Seitenwände jeweils mindestens eine L-förmige Verriegelungsnut, in die entsprechende Nocken an den Innenseiten des hakenförmigen Endes eingreifen. Hierbei wird bei der Montage jeder Nocken zunächst in einen in Richtung der Hochachse des Adapters verlaufenden Schenkel der Verriegelungsnut geschoben, während anschließend der Adapter in Längsrichtung des Wischarms verschoben wird, sodass die Nocken in den anderen Schenkel der Verriegelungsnut gelangen, der in Längsrichtung des Wischblatts zum Wischarm hin gerichtet ist. Somit ist der Adapter im hakenförmigen Ende des Wischarms gesichert.

Gemäß einer Ausgestaltung der Erfindung besitzt der Adapter an den Innenseiten seiner Seitenwände Lagerelemente, die im montierten Zustand in entsprechende Lagerelemente des Anschlusselements eingreifen und eine Schwenkachse quer zur Längsrichtung des Wischblatts bilden. Die Lagerelemente am Adapter können beispielsweise Lagerzapfen sein, während die entsprechenden Lagerelemente am Anschlusselement als Lageraugen ausgebildet werden können.

Die Anschlussvorrichtung eignet sich besonders für Anschlusselemente, die in einer Längsmittelebene geteilt sind, wobei die Teilstücke an den einander zugewandten Längsseiten Längsrippen haben, die in montiertem Zustand aneinander liegen und von den Seitenwänden des Adapters umfasst und zusammengehalten werden. Somit sind für die leicht zu montierenden Teilstücke des Anschlusselements grundsätzlich keine zusätzlichen Haltemittel erforderlich, zumal der Zusammenhalt durch das hakenförmige Ende des später montierten Wischarms verstärkt wird.

In der montierten Stellung ist der Adapter mit dem hakenförmigen Ende des Wischarms verrastet. Hierzu dient gemäß einer Ausgestaltung der Erfindung eine entgegen der Richtung der Hochachse wirkende Federzunge, die seitlich an einer Seitenwand des Adapters übersteht und einen Rastnocken aufweist. Dieser greift in montiertem Zustand in eine entsprechende Kerbe des hakenförmigen Endes ein. Vorteilhafterweise ist die Federzunge aus einem Teil einer Seitenwand gebildet, der durch einen Spalt zum größten Teil von der übrigen Seitenwand getrennt ist. Zum Lösen der Verrastung weist die Federzunge an ihrem freien Ende eine Taste auf. Diese begrenzt in Längsrichtung mit dem Rastnocken einen Zwischenraum, der Platz für ein Stück des hakenförmigen Endes bietet, das zwischen der Kerbe und dem freien Ende liegt.

Ferner kann es vorteilhaft sein, dass die Federzunge in ihrer nachgiebigen Bewegung geführt ist. Hierzu dient eine Aussparung an der dem Spalt zugewandten Seite der Federzunge. Ein entsprechender Zapfen der Seitenwand greift mit einem entsprechenden Spiel in diese Aussparung ein.

### Kurze Beschreibung der Zeichnungen

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 eine perspektivische Ansicht eines Wischblatts mit einer erfindungsgemäßen Anschlussvorrichtung und einem Wischarm,
Fig. 2 eine perspektivische Teilansicht während der Montage des Wischblatts an den Wischarm,

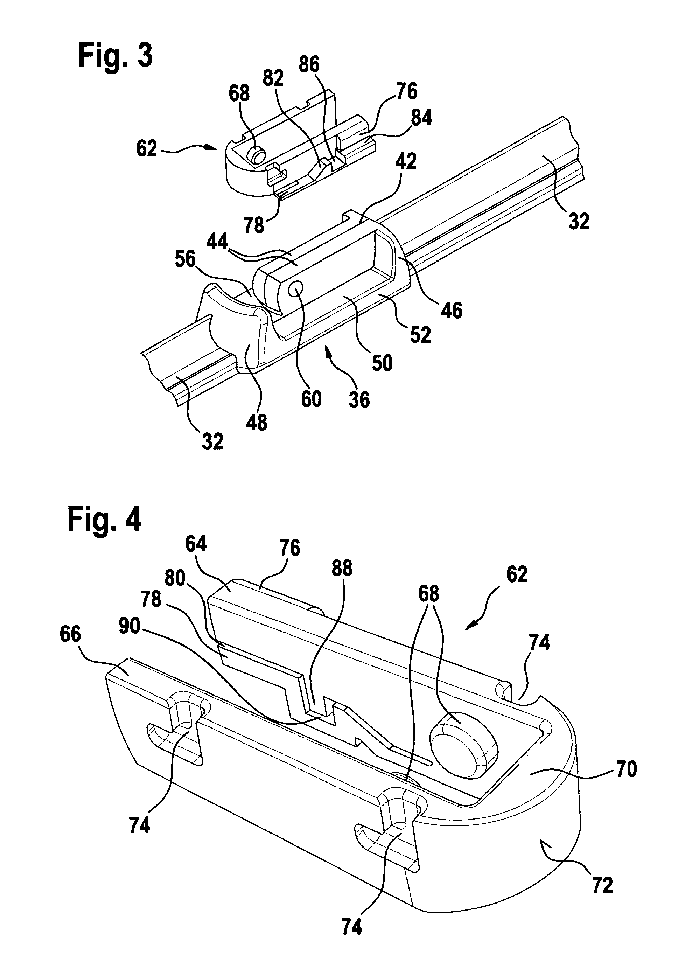

Fig. 3 eine perspektivische Teilansicht bei der Montage eines Adapters an ein Anschlusselement und
Fig. 4 eine vergrößerte perspektivische Ansicht eines Adapters.

### Ausführungsformen der Erfindung

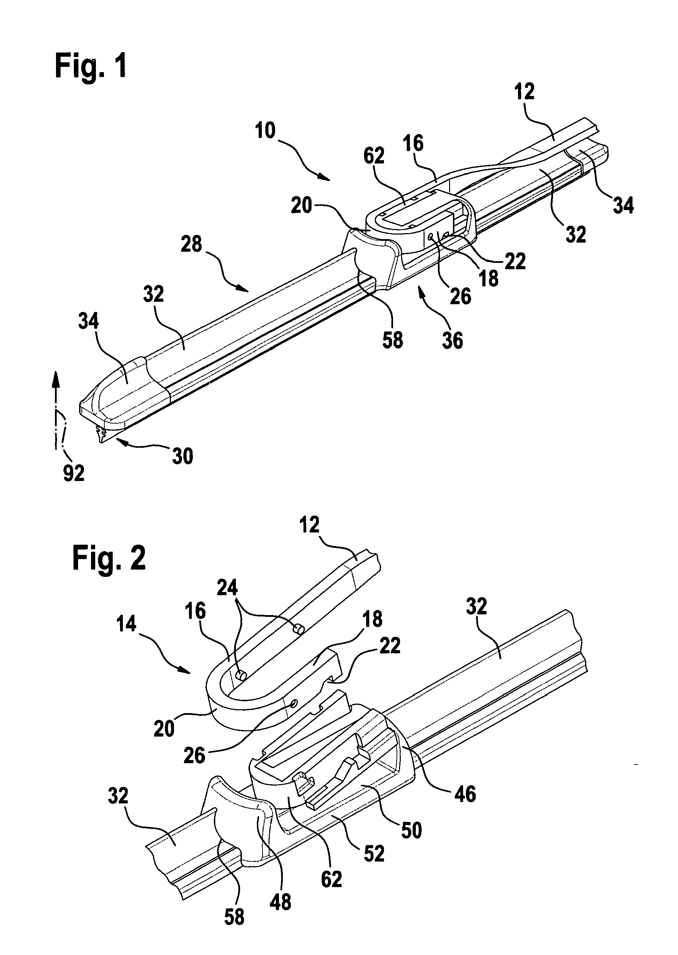

Fig. 1 zeigt ein Wischblatt 28 in Flachbalkenbauweise, das im mittleren Bereich eine Anschlussvorrichtung 10 zum gelenkigen Verbinden mit einem Wischarm 12 besitzt. In Längsrichtung zu beiden Seiten der Anschlussvorrichtung 10 sind Spoilerteile 32 an einem nicht sichtbaren Tragelement befestigt, wie es bei derartigen Wischblättern bekannt ist. Das Tragelement trägt ferner eine Wischleiste 30 zum Reinigen einer nicht dargestellten Fahrzeugscheibe. An seinen Enden trägt das Wischblatt 28 Endkappen 34.

Die Anschlussvorrichtung 10 umfasst ein zweiteiliges Anschlusselement 36 und einen Adapter 62. Das Anschlusselement 36 besitzt ein erstes Teilstück 38 und ein zweites Teilstück 40, die an den einander zugewandten Seiten Längsrippen 44 haben, die an einander liegen und eine Trennfuge 42 bilden. Die Längsrippen 44 enden in Längsrichtung mit Abstand von einer vorderen Stirnwand 48 und bilden mit dieser einen Zwischenraum 56. Dieser dient zur Aufnahme einer Stirnwand 70 des Adapters 62 und eines Bogens 20 eines hakenförmigen Endes 14 eines Wischarms 12. Die vordere Stirnwand 48 ist an ihrer Innenseite entsprechend der äußeren Umfangsfläche des Bogens 20 konkav gekrümmt, um einen Freiraum für eine Schwenkbewegung vorzusehen. Die Teilstücke 38, 40 des Anschlusselements 36 werden zum antriebsseitigen Ende hin von einer weiteren Stirnwand 46 begrenzt. Die Stirnwände 46, 48, die Anschlussprofile 58 zum Übergang zu den Spoilerteilen 32 aufweisen, und die Längsrippen 44 sind einstückig an einem Boden 50 angeformt und z.B. in einem Spritzgussverfahren aus Kunststoff hergestellt. Der Boden 50 umfasst mit Seitenwänden 52 das Tragelement des Wischblatts 28.

Der Adapter 62 besitzt eine hufeisenförmige Gestalt, wobei die Stirnwand 70 eine erste Seitenwand 64 mit einer zweiten Seitenwand 66 verbindet. Die Seitenwände 64, 66 und die Stirnwand 70 besitzen an ihren Außenseiten Anlageflächen 72, die in Richtung einer Hochachse 92 des Wischblatts 28 verlaufen. Dabei ist die Anlagefläche 72 im Bereich der Stirnwand konvex entsprechend der Innenfläche des Bogens 20 des hakenförmigen Endes 14 gekrümmt, sodass das hakenförmige Ende 14 in montiertem Zustand eng an der Anlagefläche 72 anliegt. Die beiden Seitenwände 64, 66 und die Stirnwand 70 schließen einen Innenraum ein, der auf der der Stirnwand 70 gegenüberliegenden Seite offen ist. An den Innenseiten der Seitenwände 64, 66 sind einander gegenüberliegende Lagerelemente in Form von Lagerzapfen 68 vorgesehen. Diese greifen in entsprechende Lagerelemente an den Längsrippen 44 des Anschlusselements 36 ein, die in Form von Lageraugen 60 ausgebildet sind. Die Lagerzapfen 68 und die Lageraugen 60 bilden eine quer zum Wischblatt 28 verlaufende Schwenkachse, sodass in montiertem Zustand der Wischarm 12 schwenkbar mit dem Wischblatt 28 verbunden ist.

Das hakenförmige Ende 14 des Wischarms 12 besitzt einen ersten Schenkel 16 in Verlängerung des Wischarms 12, der über den Bogen 20 mit einem zweiten Schenkel 18 verbunden ist. An der Innenseite des ersten Schenkels 16 sind zwei Nocken 24 angeordnet, während an dem zweiten Schenkel 18 zum Bogen 20 hin nur ein Nocken 24 vorgesehen ist. Die Nocken 24 werden zweckmäßigerweise durch Pressen spanlos aus dem Material des Wischarms 12 geformt, wobei auf der Außenseite der Schenkel 16, 18 entsprechende Vertiefungen 26 entstehen.

Das hakenförmige Ende 14 wird durch die Nocken 24 in 1-förmigen Verriegelungsnuten 74 an den Außenseiten der Seitenwände 64 am Adapter 62 gehalten. Dabei verläuft ein Schenkel der Verriegelungsnuten etwa in Richtung der Hochachse 92, während der andere Schenkel in Längsrichtung zum antriebsseitigen Ende des Wischblatts 28 gerichtet ist. Die Nocken 24 und die 1-förmigen Verriegelungsnuten 74 sind so angeordnet, dass das hakenförmige Ende 14 zunächst in der Richtung der Hochachse 92 in die Verriegelungsnut 74 eingefädelt und nach Erreichen des anderen Schenkels der Verriegelungsnut 74 in Längsrichtung des Adapters 62 verschoben werden kann. Dadurch ist das hakenförmige Ende 14 in Richtung der Hochachse blockiert.

Der Adapter 62 besitzt an seiner ersten Seitenwand 64, an der der zweite Schenkel 18 des hakenförmigen Endes 14 anliegt, nur eine Verriegelungsnut 74, die zur Stirnwand 70 hin angeordnet ist. Die erste Seitenwand 64 besitzt eine seitlich nach außen vorstehende Federzunge 78 mit einem Rastnocken 82. Wird der Adapter 62 bei der Montage in das hakenförmige Ende 14 des Wischarms 12 in Längsrichtung zum freien Ende des Wischarms 12 verschoben, rastet eine Kerbe 22 am freien Ende des zweiten Schenkels 18 am Rastnocken 82 ein. Die Federzunge 78 ist über den Rastnocken 82 hinaus verlängert und ist an diesem Ende mit einer Taste 84 versehen. Durch die Betätigung der Taste 84 entgegengesetzt zur Hochachse 92 bewegt sich der Rastnocken 82 aus der Kerbe 22, sodass die Rastverbindung gelöst wird. Zwischen dem Rastnocken 82 und der Taste 84 ist ein Zwischenraum 86 für das über die Kerbe 22 ragende Ende des zweiten Schenkels 18 vorgesehen.

Die Federzunge 78 wird zweckmäßig aus einem Teil der ersten Seitenwand 64 gebildet, indem sie durch einen Spalt 80 bis auf einen kleinen Rest von der übrigen Seitenwand 64 getrennt ist. Eine Verdickung 76 an der Außenseite der ersten Seitenwand 64 dient im Bereich der Taste 84 als Anschlag. Ferner besitzt die Federzunge 78 im Bereich des Zwischenraums 86 eine Aussparung 90, in die ein Zapfen 88 der ersten Seitenwand 64 eingreift. Der Zapfen 88 kann zur Führung der Federzunge 78 relativ zur Seitenwand 64 dienen.

## Patentansprüche

1. Anschlussvorrichtung (10) zum gelenkigen Verbinden eines Wischblatts (28) in Flachbalkenbauweise mit einem Wischarm (12), der ein hakenförmiges Ende (14) mit einem zum Wischarm (12) hin angeordneten, ersten Schenkel (16) aufweist, der über einen Bogen (20) mit einem zweiten Schenkel (18) verbunden ist, wobei am Wischblatt (28) ein Anschlusselement (36) befestigt ist, das mit einem Adapter (62) verbunden ist, der seinerseits mit dem hakenförmigen Ende (14) des Wischarms (12) verbindbar ist, wobei der Adapter (62) eine erste Seitenwand (64) und eine zweite Seitenwand (66) besitzt, die über eine Stirnwand (70) nach Art eines Hufeisens verbunden sind, wobei die Anlageflächen (72) für das hakenförmige Ende (14) an den Außenseiten der Seitenwände (64, 66) und der Stirnwand (70) angeordnet sind und etwa in Richtung einer Hochachse (92) des Wischblatts (28) verlaufen, **dadurch gekennzeichnet, dass** der Adapter (62) schwenkbar mit dem Anschlusselement (36) verbunden ist und in den Außenseiten seiner Seitenwände (64, 66) jeweils mindestens eine L-förmige Verriegelungsnut (74) besitzt, wobei ein Schenkel der Verriegelungsnut (74) in Richtung der Hochachse (92) weist und der andere Schenkel in Längsrichtung des Wischblatts (28) zum Wischarm (12) gerichtet ist.

2. Anschlussvorrichtung (10) nach Anspruch 1, **dadurch gekennzeichnet, dass** der Adapter (62) an den Innenseiten seiner Seitenwände (64, 66) Lagerelemente (68) besitzt, die im montierten Zustand in entsprechende Lagerelemente (60) des Anschlusselements (36) eingreifen und eine Schwenkachse quer zur Längsrichtung des Wischblatts (28) bilden.

3. Anschlussvorrichtung (10) nach Anspruch 2, **dadurch gekennzeichnet, dass** das Anschlusselement (36) ein erstes und zweites Teilstück (38, 40) besitzt, die an den einander zugewandten Längsseiten Längsrippen (44) haben, die im montierten Zustand aneinander liegen und von den Seitenwänden (64, 66) des Adapters (62) umfasst und zusammengehalten werden.

4. Anschlussvorrichtung (10) nach einem der vorhergehenden Ansprüche, **dadurch gekennzeichnet, dass** der Adapter (62) eine seitlich an einer Seitenwand (64, 66) überstehende, entgegen der Richtung der Hochachse (92) wirkende Federzunge (78) mit einem Rastnocken (82) aufweist, der im montierten Zustand in eine entsprechende Kerbe (22) des hakenförmigen Endes (14) des Wischarms (12) eingreifen kann.

5. Anschlussvorrichtung (10) nach Anspruch 4, **dadurch gekennzeichnet, dass** die Federzunge (78) aus einem Teil einer Seitenwand (64, 66) gebildet ist, der durch einen Spalt (80) zum größten Teil von der übrigen Seitenwand (64, 66) getrennt ist.

6. Anschlussvorrichtung (10) nach Anspruch 4 oder 5, **dadurch gekennzeichnet, dass** die Federzunge (78) an ihrem freien Ende eine Taste (84) aufweist, die in Längsrichtung mit dem Rastnocken (82) einen Zwischenraum (86) begrenzt.

7. Anschlussvorrichtung (10) nach einem der Ansprüche 5 oder 6, **dadurch gekennzeichnet, dass** die Federzunge (78) an ihrer dem Spalt (80) zugewandten Seite eine Aussparung (90) besitzt, in die ein Zapfen (88) der Seitenwand (64, 66) eingreift.

8. Wischblatt (28) in Flachbalkenbauweise mit einem Anschlusselement (36) und einem Adapter (62), der eine erste Seitenwand (64) und eine zweite Seitenwand (66) besitzt, die über eine Stirnwand (70) nach Art eines Hufeisens verbunden sind, wobei die Anlageflächen (72) für ein hakenförmiges Ende (14) eines Wischarms (12) an den Außenseiten der Seitenwände (64, 66) und der Stirnwand (70) angeordnet sind und etwa in Richtung einer Hochachse (92) des Wischblatts (28) verlaufen, **dadurch gekennzeichnet, dass** der Adapter (62) schwenkbar mit dem Anschlusselement (36) verbunden ist und in den Außenseiten seiner Seitenwände (64, 66) jeweils mindestens eine L-förmige Verriegelungsnut (74) besitzt, wobei ein Schenkel der Verriegelungsnut (74) in Richtung der Hochachse (92) weist und der andere Schenkel in Längsrichtung des Wischblatts (28) zum Wischarm (12) gerichtet ist.

9. Wischarm (12) mit einem hakenförmigen Ende (14), das von einem ersten Schenkel (16) und einem zweiten Schenkel (18) gebildet wird, die durch einen Bogen (20) miteinander verbunden sind, und mit seinen Innenseiten im montierten Zustand an Anlageflächen (72) eines Adapters (62) anliegt, wobei der Wischarm mit einer Anschlussvorrichtung (10) nach einem der vorhergehenden Ansprüche verwendet wird und die Innenseiten des hakenförmigen Endes (14) in Richtung der Hochachse (92) verlaufen, **dadurch gekennzeichnet, dass** die Innenseiten des hakenförmigen Endes (14) Nocken (24) aufweisen, die zu den Verriegelungsnuten (74) des Adapters (62) passen.

10. Wischarm (12) nach Anspruch 9, **dadurch gekennzeichnet, dass** in der der Wischleiste (30) zugewandten Seite des hakenförmigen Endes (14) eine Kerbe (22) vorgesehen ist, die zu einem Rastnocken (82) des Adapters (62) passt.

## Claims

1. Connection device (10) for the articulated connection of a wiper blade (28) of flat-bar construction, having a wiper arm (12) which has a hook-like end (14) with a first limb (16), which is arranged in the direction of the wiper arm (12) and is connected to a second limb (18) via an arc (20), wherein the wiper blade (28) has fastened on it a connection element (36) which is connected to an adapter (62) which, for its part, can be connected to the hook-like end (14) of the wiper arm (12), wherein the adapter (62) has a first side wall (64) and a second side wall (66), which are connected in the manner of a horseshoe via an end wall (70), wherein the abutment surfaces (72) for the hook-like end (14) are arranged on the outer sides of the side walls (64, 66) and of the end wall (70) and run approximately in the direction of a vertical axis (92) of the wiper blade (28), **characterized in that** the adapter (62) is connected in a pivotable manner to the connection element (36) and, in the outer sides of its side walls (64, 66), has in each case at least one L-shaped locking groove (74), wherein one limb of the locking groove (74) is oriented in the direction of the vertical axis (92) and the other limb is directed in the longitudinal direction of the wiper blade (28) in relation to the wiper arm (12).

2. Connection device (10) according to Claim 1, **characterized in that** the adapter (62), on the inner sides of its side walls (64, 66), has bearing elements (68) which, in the assembled state, engage in corresponding bearing elements (60) of the connection element (36) and form a pivot axis transversely to the longitudinal direction of the wiper blade (28).

3. Connection device (10) according to Claim 2, **characterized in that** the connection element (36) has a first component (38) and a second component (40), which, on the mutually facing longitudinal sides, have longitudinal ribs (44), which, in the assembled state, butt against one another and are enclosed, and held together, by the side walls (64, 66) of the adapter (62).

4. Connection device (10) according to one of the preceding claims, **characterized in that** the adapter (62) has a resilient tongue (78) which projects laterally on a side wall (64, 66), acts counter to the direction of the vertical axis (92) and has a latching protuberance (82) which, in the assembled state, can engage in a corresponding notch (22) of the hook-like end (14) of the wiper arm (12).

5. Connection device (10) according to Claim 4, **characterized in that** the resilient tongue (78) is formed from a part of a side wall (64, 66) which is predominantly separated by a gap (80) from the rest of the side wall (64, 66).

6. Connection device (10) according to Claim 4 or 5, **characterized in that** the resilient tongue (78), at its free end, has a button (84) which, with the latching protuberance (82), bounds an interspace (86) in the longitudinal direction.

7. Connection device (10) according to either of Claims 5 and 6, **characterized in that** the resilient tongue (78), on its side which is directed towards the gap (80), has an aperture (90) in which a stub (88) of the side wall (64, 66) engages.

8. Wiper blade (28) of flat-bar construction having a connection element (36) and an adapter (62) which has a first side wall (64) and a second side wall (66), which are connected in the manner of a horseshoe via an end wall (70), wherein the abutment surfaces (72) for a hook-like end (14) of a wiper arm (12) are arranged on the outer sides of the side walls (64, 66) and of the end wall (70) and run approximately in the direction of a vertical axis (92) of the wiper blade (28), **characterized in that** the adapter (62) is connected in a pivotable manner to the connection element (36) and, in the outer sides of its side walls (64, 66), has in each case at least one L-shaped locking groove (74), wherein one limb of the locking groove (74) is oriented in the direction of the vertical axis (92) and the other limb is directed in the longitudinal direction of the wiper blade (28) in relation to the wiper arm (12).

9. Wiper blade (12) having a hook-like end (14) which is formed by a first limb (16) and a second limb (18), connected to one another by an arc (20), and having its inner sides in the assembled state, butting against abutment surfaces (72) of an adapter (62), wherein the wiper arm is used with a connection device (10) according to one of the preceding claims and the inner sides of the hook-like end (14) run in the direction of the vertical axis (92), **characterized in that** the inner sides of the hook-like end (14) have protuberances (24) which fit in the locking grooves (74) of the adapter (62).

10. Wiper blade (12) according to Claim 9, **characterized in that** that side of the hook-like end (14) which is directed towards the wiper strip (30) contains a notch (22) appropriate for a latching protuberance (82) of the adapter (62).

## Revendications

1. Dispositif d'assemblage (10) pour la liaison articulée d'un balai d'essuie-glace (28) de construction à bande plate avec un bras d'essuie-glace (12) qui présente une extrémité en forme de crochet (14) avec une première branche (16) disposée vers le bras d'essuie-glace (12), qui est reliée à une deuxième branche (18) par le biais d'un arc (20), un élément d'assemblage (36) étant fixé au balai d'essuie-glace (28), lequel est relié à un adaptateur (62) qui peut pour sa part être relié à l'extrémité en forme de crochet (14) du bras d'essuie-glace (12), l'adaptateur (62) possédant une première paroi latérale (64) et une deuxième paroi latérale (66), qui sont reliées par le biais d'une paroi frontale (70) à la manière d'un fer à cheval, les faces d'appui (72) pour l'extrémité en forme de crochet (14) étant disposées au niveau des côtés extérieurs des parois latérales (64, 66) et de la paroi frontale (70) et s'étendant approximativement dans la direction d'un axe vertical (92) du balai d'essuie-glace (28), **caractérisé en ce que** l'adaptateur (62) est connecté de manière pivotante à l'élément d'assemblage (36) et possède, dans les côtés extérieurs de ses parois latérales (64, 66) à chaque fois au moins une rainure de verrouillage (74) en forme de L, une branche de la rainure de verrouillage (74) étant tournée dans la direction de l'axe vertical (92) et l'autre branche étant orientée dans la direction longitudinale du balai d'essuie-glace (28) vers le bras d'essuie-glace (12).

2. Dispositif d'assemblage (10) selon la revendication 1, **caractérisé en ce que** l'adaptateur (62) possède, au niveau des côtés intérieurs de ses parois latérales (64, 66), des éléments de palier (68) qui, dans l'état monté, viennent en prise dans des éléments de palier correspondants (60) de l'élément d'assemblage (36) et forment un axe de pivotement transversalement à la direction longitudinale du balai d'essuie-glace (28).

3. Dispositif d'assemblage (10) selon la revendication 2, **caractérisé en ce que** l'élément d'assemblage (36) possède une première pièce partielle et une deuxième pièce partielle (38, 40), lesquelles ont des nervures longitudinales (44) au niveau des côtés longitudinaux tournés l'un vers l'autre, lesquelles nervures longitudinales, dans l'état monté, s'appliquent l'une contre l'autre et sont entourées et maintenues ensemble par les parois latérales (64, 66) de l'adaptateur (62).

4. Dispositif d'assemblage (10) selon l'une quelconque des revendications précédentes, **caractérisé en ce que** l'adaptateur (62) présente une langue élastique (78) saillant latéralement au niveau d'une paroi latérale (64, 66), agissant à l'encontre de la direction de l'axe vertical (92), avec une came d'encliquetage (82) qui peut venir en prise dans l'état monté dans une entaille correspondante (22) de l'extrémité en forme de crochet (14) du bras d'essuie-glace (12).

5. Dispositif d'assemblage (10) selon la revendication 4, **caractérisé en ce que** la langue élastique (78) est formée d'une partie d'une paroi latérale (64, 66) qui est séparée par une fente (80) de la plus grande partie de la paroi latérale restante (64, 66).

6. Dispositif d'assemblage (10) selon la revendication 4 ou 5, **caractérisé en ce que** la langue élastique (78) présente à son extrémité libre une touche (84) qui limite un espace intermédiaire (86) dans la direction longitudinale avec la came d'encliquetage (82).

7. Dispositif d'assemblage (10) selon l'une quelconque des revendications 5 ou 6, **caractérisé en ce que** la langue élastique (78) possède au niveau de son côté tourné vers la fente (80) un évidement (90) dans lequel s'engage un tourillon (88) de la paroi latérale (64, 66).

8. Balai d'essuie-glace (28) de construction à bande plate avec un élément d'assemblage (36) et un adaptateur (62) qui possède une première paroi latérale (64) et une deuxième paroi latérale (66), lesquelles sont reliées l'une à l'autre par le biais d'une paroi frontale (70) à la manière d'un fer à cheval, les faces d'appui (72) pour une extrémité en forme de crochet (14) d'un bras d'essuie-glace (12) étant disposées au niveau des côtés extérieurs des parois latérales (64, 66) et de la paroi frontale (70) et s'étendant approximativement dans la direction d'un axe vertical (92) du balai d'essuie-glace (28), **caractérisé en ce que** l'adaptateur (62) est relié de manière pivotante à l'élément d'assemblage (36) et possède dans les côtés extérieurs de ses parois latérales (64, 66) à chaque fois au moins une rainure de verrouillage (74) en forme de L, une branche de la rainure de verrouillage (74) étant tournée dans la direction de l'axe vertical (92) et l'autre branche étant orientée dans la direction longitudinale du balai d'essuie-glace (28) vers le bras d'essuie-glace (12).

9. Bras d'essuie-glace (12) comprenant une extrémité en forme de crochet (14), qui est formée par une première branche (16) et une deuxième branche (18), qui sont reliées l'une à l'autre par un arc (20) et qui s'applique avec ses côtés intérieurs dans l'état monté contre des faces d'appui (72) d'un adaptateur (62), le bras d'essuie-glace étant utilisé avec un dispositif d'assemblage (10) selon l'une quelconque des revendications précédentes, et les côtés intérieurs de l'extrémité en forme de crochet (14) s'étendant dans la direction de l'axe vertical (92), **caractérisé en ce que** les côtés intérieurs de l'extrémité en forme de crochet (14) présentent des cames (24) qui s'adaptent aux rainures de verrouillage (74) de l'adaptateur (62).

10. Bras d'essuie-glace (12) selon la revendication 9, **caractérisé en ce que** dans le côté de l'extrémité en forme de crochet (14) tourné vers la raclette de balai d'essuie-glace (30) est prévue une entaille (22) qui s'adapte avec une came d'encliquetage (82) de l'adaptateur (62).
